# EUROPÄISCHE PATENTANMELDUNG

(11) **EP 2 581 512 A2**
(43) Veröffentlichungstag der Anmeldung: **17.04.2013**
(21) Anmeldenummer: 12187034.9
(22) Anmeldetag: 02.10.2012
(51) Int. Cl.: E04B 1/76

(54) **Kunststoffanker zur Befestigung von Dämmplatten an Gebäuden**

(30) Priorität: 12.10.2011 DE 202011051608 U; 21.10.2011 DE 202011051716 U
(71) Anmelder: Kammerer, Rolf, 75196 Remchingen (DE)
(72) Erfinder: Kammerer, Rolf, 75196 Remchingen (DE)
(74) Vertreter: Twelmeier Mommer & Partner

(57) **Zusammenfassung**

Die Erfindung betrifft einen Kunststoffanker zur Befestigung von Dämmplatten an Gebäuden, mit einem Schaft (1), der einen ersten Abschnitt zur Verankerung in einem Loch einer Gebäudewand und einen zweiten Abschnitt, der einen Widerhaken (3) zum Halten einer Dämmplatte trägt, aufweist.

## Beschreibung

Dämmplatten werden üblicher Weise auf Gebäudewände aufgeklebt. Mit gängigen Klebstoffen auf Basis von Polyurethan wird dabei oft nur eine unzureichende Befestigung erreicht. Dämmplatten werden deshalb in vielen Fällen zusätzlich mittels Dübeln und Schrauben an Gebäudewänden gesichert.

Aufgabe der vorliegenden Erfindung ist es, einen Weg aufzuzeigen, wie Dämmplatten mit geringeren Kosten zuverlässig an Gebäudewänden befestigt werden können.

Diese Aufgabe wird durch einen Kunststoffanker mit den im Anspruch 1 angegebenen Merkmalen gelöst. Vorteilhafte Weiterbildungen der Erfindung sind Gegenstand von Unteransprüchen.

Ein erfindungsgemäßer Kunststoffanker hat einen Schaft, der einen ersten Abschnitt zur Verankerung in einem Loch einer Gebäudewand aufweist. Ein zweiter Abschnitt des Schafts hat wenigstens einen, bevorzugt mehrere Widerhaken zum Halten einer Dämmplatte. Zum Gebrauch wird der Kunststoffanker einfach mit seinem ersten Abschnitt in ein Loch einer Gebäudewand gesteckt, so dass er mit seinem zweiten Abschnitt aus dem Loch herausragt. Die Dämmplatte wird dann gegen die Gebäudewand gedrückt. Dabei bohrt sich der zweite Abschnitt in die Dämmplatte hinein, so dass diese von den Widerhaken der Kunststoffanker gehalten ist. Erfindungsgemäße Kunststoffanker ermöglichen so eine einfache und zuverlässige Befestigung von Dämmplatten an Gebäuden. Vorteilhaft ist zudem, dass der Kunststoffanker keine Wärmebrücke bildet und im Gegensatz zu einer herkömmlichen Verschraubung die Wärmeisolation der Dämmplatte nicht beeinträchtigt.

Der erste Abschnitt des Schafts kann in dem Loch stoffschlüssig gehalten werden, beispielsweise mit einem Klebstoff, der auch zum Aufkleben der Dämmplatte an der Gebäudewand verwendet wird. Ein Stoffschluss ist aber nicht erforderlich. Bevorzugt trägt der erste Abschnitt eine Folge von sich quer zur Längsrichtung des Schafts erstreckenden Vorsprüngen, beispielsweise Lamellen. Diese Vorsprünge werden beim Einstecken des ersten Schaftabschnitts in das Loch der Gebäudewand zusammen gedrückt und setzen deshalb einem Herausziehen des Kunststoffankers einen erheblichen Widerstand entgegen.

Besonders vorteilhaft ist es, die Vorsprünge als Lamellen auszubilden. Eine vorteilhafte Weiterbildung eines erfindungsgemäßen Kunststoffankers betrifft also einen Kunststoffanker mit einem Schaft, wobei ein erster Abschnitt des Schafts Lamellen zur Verankerung in einem Loch einer Gebäudewand und ein zweiter Abschnitt des Schafts wenigstens einen Widerhaken zum Halten einer Dämmplatte aufweist. Die Lamellen werden beim Einstecken des Kunststoffankers in ein Loch einer Gebäudewand umgebogen. Wenn man den Kunststoffanker dann wieder aus dem Loch herausziehen möchte, drücken die äußeren Ränder der Lamellen gegen die Wand des Bohrlochs und setzen deshalb einem Herausziehen einen erheblichen Widerstand entgegen. Bevorzugt erstrecken sich die Lamellen senkrecht zur Längsrichtung des Schafts, d. h. die Längsrichtung des Schafts steht senkrecht zur Fläche der Lamellen. An sich ist es aber auch möglich, dass die Lamellen mit der Längsrichtung des Schafts einen von 90° abweichenden Winkel einschließen.

Eine weitere vorteilhafte Weiterbildung der Erfindung sieht vor, dass der erste Abschnitt zusammen mit den Vorsprüngen eine Breite hat, die wenigstens das doppelte, vorzugsweise wenigstens das Dreifache, der Breite des Schafts ohne die Vorsprünge beträgt.

Eine weitere vorteilhafte Weiterbildung der Erfindung sieht vor, dass zwischen dem ersten und dem zweiten Abschnitt des Schafts ein Anschlag ist. Ein solcher Anschlag sorgt vorteilhaft dafür, dass sich der Kunststoffanker nur mit dem ersten Abschnitt des Schafts, nämlich bis zu dem Anschlag in ein Loch einer Gebäudewand stecken lässt. Bei ausreichend tiefen Löchern sorgt ein Anschlag dafür, dass alle Kunststoffanker einer Bauserie gleich weit aus einer Gebäudewand herausragen, was das Anbringen von Dämmplatten erleichtert, die dann zur Befestigung einer Gebäudewand einfach auf die aus der Gebäudewand herausragenden zweiten Abschnitte mit den Widerhaken der Kunststoffanker gedrückt werden.

Der Anschlag kann beispielsweise dadurch gebildet werden, dass der Durchmesser des Schafts zwischen dem ersten und dem zweiten Abschnitt sprunghaft zunimmt. Bevorzugt ist der Anschlag aber als eine Platte ausgebildet, wobei die Längsrichtung des Schafts senkrecht zur Ebene der Platte orientiert ist. Die Platte kann umlaufend um den Schaft ausgebildet sein. Möglich ist es aber auch, dass sich eine erste Hälfte der Platte zu einer Seite erstreckt und auf der gegenüberliegenden Seite des Schafts ein zweiter Teil der Platte angeordnet ist.

Eine weitere vorteilhafte Weiterbildung der Erfindung sieht vor, dass alle Widerhaken in derselben Ebene angeordnet sind. Dies bedeutet, dass der Schaft höchstens zwei Reihen, bevorzugt genau zwei Reihen von hintereinander angeordneten Widerhaken trägt. Vorteilhaft vereinfacht sich dadurch die Fertigung eines erfindungsgemäßen Kunststoffankers. Der Kunststoffanker lässt sich dann nämlich als Spritzgussteil besonders leicht herstellen und entformen.

Die Widerhaken erstrecken sich bevorzugt nur in zwei Richtungen. Die Widerhaken eines Kunststoffankers können sich selbstverständlich auch in mehrere Richtungen, beispielsweise in drei oder vier Richtungen erstrecken, jedoch vereinfacht sich die Fertigung eines erfindungsgemäßen Kunststoffankers vorteilhaft, wenn sich Widerhaken in genau zwei gegenüberliegende Richtungen erstrecken.

Eine weitere vorteilhafte Weiterbildung der Erfindung sieht vor, dass Widerhaken und Lamellen nur von zwei gegenüberliegenden Seiten des Schafts ausgehen. Lamellen und Widerhaken erstrecken sich also nur in zwei Richtungen, die einander entgegengesetzt sind. Unabhängig davon, ob der Schaft einen kreisrunden Querschnitt oder beispielsweise einen rechteckigen Querschnitt aufweist, lässt sich dadurch die Herstellung vereinfachen, da zum Gießen, insbesondere Spritzgießen, einfachere Formen ausreichen und sich der Kunststoffanker leichter aus der Form nehmen lässt. Falls ein Anschlag vorhanden ist, befindet sich dieser dann vorzugsweise ebenfalls nur auf zwei entgegen gesetzten Seiten des Schafts. Zwei gegenüberliegende Seiten des Schafts können so frei bleiben.

Eine weitere vorteilhafte Weiterbildung der Erfindung sieht vor, dass der Schaft einen in seiner Längsrichtung verlaufenden Kanal für Klebstoff aufweist. Indem der Kanal mit Klebstoff gefüllt wird, lässt sich die Befestigung des Kunststoffankers in einem Loch einer Gebäudewand und/oder die Verbindung mit einer Dämmplatte verbessern. Vorteilhaft können Klebstoffe beispielsweise aus seitlichen Öffnungen des Kanals oder Aussparungen des Schaftes austreten den Kunststoffanker mit einer Gebäudewand oder einer Dämmplatte verkleben. Als Klebstoff sind insbesondere schäumende Kunststoffe geeignet.

Erfindungsgemäße Kunststoffanker können zusammen mit einer Klebstoffschicht, beispielsweise auf Polyurethanbasis, eine zuverlässige Befestigung von Dämmplatten an Gebäudewänden bewirken. Zudem können erfindungsgemäße Kunststoffanker auch als Montagehilfe verwendet werden, beispielsweise um Platten zu fixieren, die zusätzlich noch verschraubt werden sollen.

Weitere Einzelheiten und Vorteile der Erfindung werden an Ausführungsbeispielen unter Bezugnahme auf die beigefügten Abbildungen erläutert. Gleiche und einander entsprechende Teile sind dabei mit übereinstimmenden Bezugszahlen bezeichnet. Es zeigen
- Figur 1: ein Ausführungsbeispiel eines Kunststoffankers zur Befestigung von Dämmplatten an Gebäuden;
- Figur 2: ein weiteres Ausführungsbeispiel eines Kunststoffankers zur Befestigung von Dämmplatten an Gebäuden;
- Figur 3: ein weiteres Ausführungsbeispiel eines Kunststoffankers zur Befestigung von Dämmplatten an Gebäuden;
- Figur 4: eine weitere Ansicht zu Fig. 3;
- Figur 5: eine weitere Ansicht zu Fig. 4;
- Figur 6: ein weiteres Ausführungsbeispiel eines Kunststoffankers zur Befestigung von Dämmplatten an Gebäuden;
- Figur 7: ein weiteres Ausführungsbeispiel eines Kunststoffankers zur Befestigung von Dämmplatten an Gebäuden; und
- Figur 8: eine schematische Darstellung eines weiteren Ausführungsbeispiel eines Kunststoffankers in einer geschnitten Ansicht.

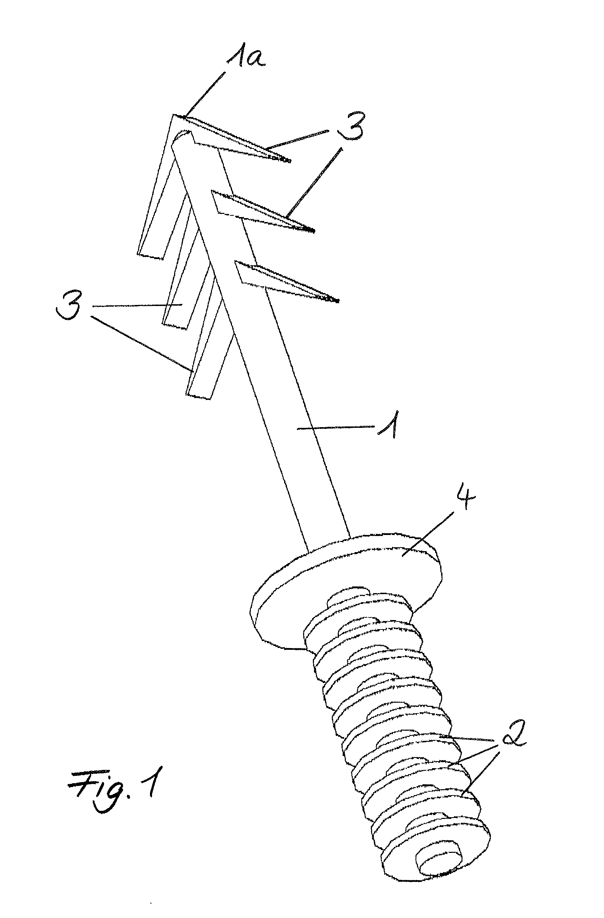

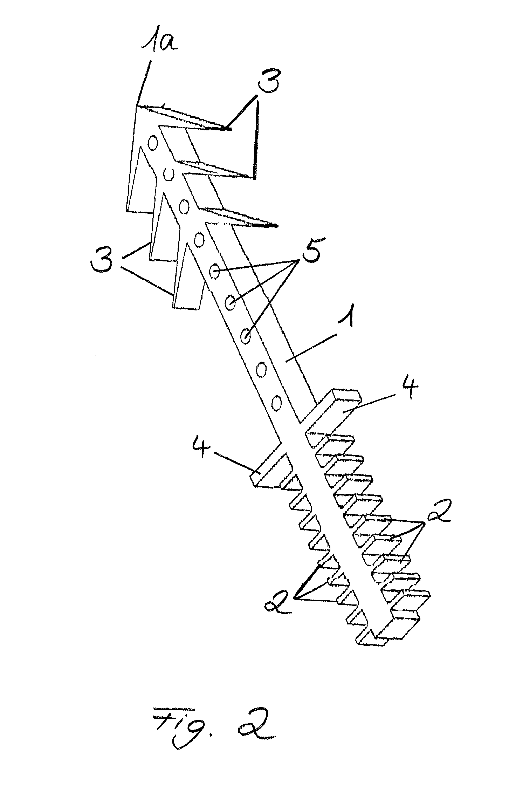

Die in den Figuren 1 und 2 dargestellten Kunststoffanker haben jeweils einen Schaft 1, der in einer Spitze 1a endet. Ein erster Abschnitt des Schafts 1 dient zur Verankerung in einem Loch einer Gebäudewand und weist dazu eine Folge von sich senkrecht zur Längsrichtung des Schafts 1 erstreckenden Lamellen 2 auf. Ein zweiter Abschnitt des Schafts 1 trägt mehrere Widerhaken 3 zum Halten einer Dämmplatte. Bevorzugt sind genau zwei Reihen von hintereinander angeordneten Widerhaken 3 vorhanden, wie dies bei den beiden Ausführungsbeispielen der Fall ist. Zwischen dem ersten und dem zweiten Abschnitt des Schafts 1 ist ein Anschlag 4. Der Anschlag 4 wird bei den dargestellten Ausführungsbeispielen von einer Platte gebildet. Die Längsrichtung des Schafts 1 ist dabei senkrecht zur Ebene der Platte orientiert.

Zur Verankerung des Kunststoffankers in einem Loch einer Gebäudewand wird der Kunststoffanker mit seinem ersten Abschnitt in das Loch gesteckt, so dass die Lamellen 2 umgebogen werden und der Anschlag 4 an der Gebäudewand anliegt. Damit die Lamellen 2 einem Herausziehen des Kunststoffankers aus dem Loch einen großen Widerstand entgegen setzen, ist es vorteilhaft, wenn der erste Abschnitt einschließlich der Lamellen 2 eine Breite hat, die wenigstens das Doppelte, vorzugsweise wenigstens das Dreifache der Breite des Schafts 1 ohne die Lamellen beträgt. Die Breite ist dabei jeweils senkrecht zur Längsrichtung des Schafts 1 zwischen den Lamellen 2 zu messen. Bei einem zylindrischen Schaft, wie beispielsweise dem Ausführungsbeispiel der Figur 1, entspricht die Breite also dem Durchmesser. Wie Figur 2 zeigt, kann der Schaft 1 aber auch eine andere Form haben, beispielsweise einen rechteckigen Querschnitt aufweisen.

Bei den beiden dargestellten Ausführungsbeispielen gehen die Widerhaken 3 nur von zwei gegenüberliegenden Seiten des Schafts 1 aus. Mit anderen Worten, liegen die Widerhaken 3 also in einer Ebene. Dies hat den Vorteil, dass sich die Kunststoffanker besonders kostengünstig als Spritzgussteile aus Kunststoff herstellen lassen, da sich derartige Kunststoffanker leichter entformen lassen und einfachere Formen ausreichen, als dies bei Kunststoffankern der Fall wäre, bei denen sich die Widerhaken 3 in drei, vier oder noch mehr Richtungen erstrecken.

Bei dem in Figur 2 dargestellten Ausführungsbeispiel weist der Schaft 1 in dem zweiten Abschnitt Aussparungen 5 auf. Diese Aussparungen 5 können vorteilhaft Klebstoff aufnehmen und so die Verbindung zwischen Kunststoffanker und Dämmplatte verbessern. Aussparungen 5 in dem zweiten Abschnitt können aber auch einfach zur Material und Gewichtseinsparung vorgesehen sein.

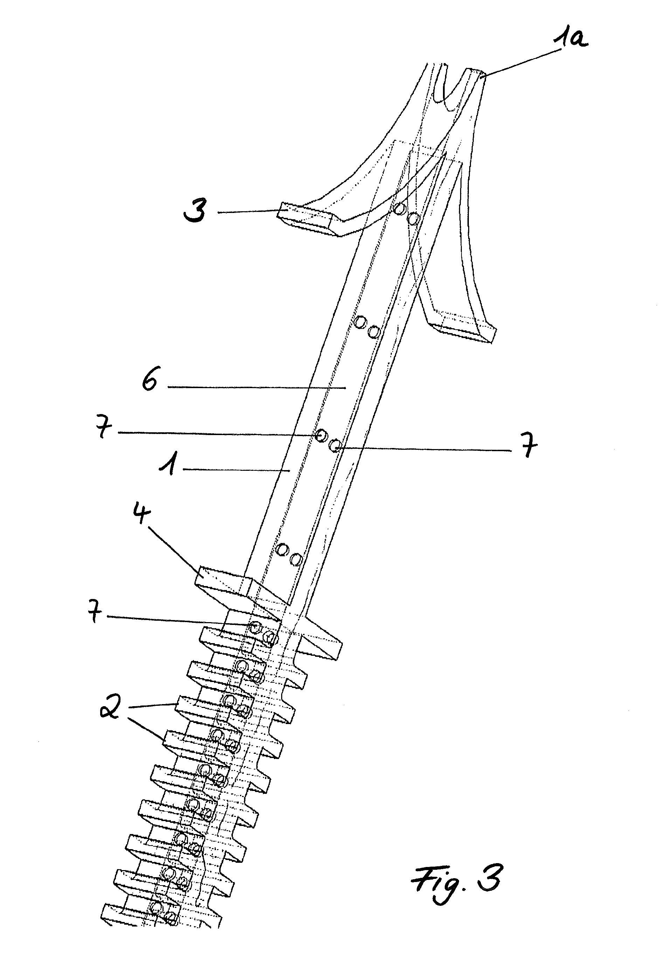

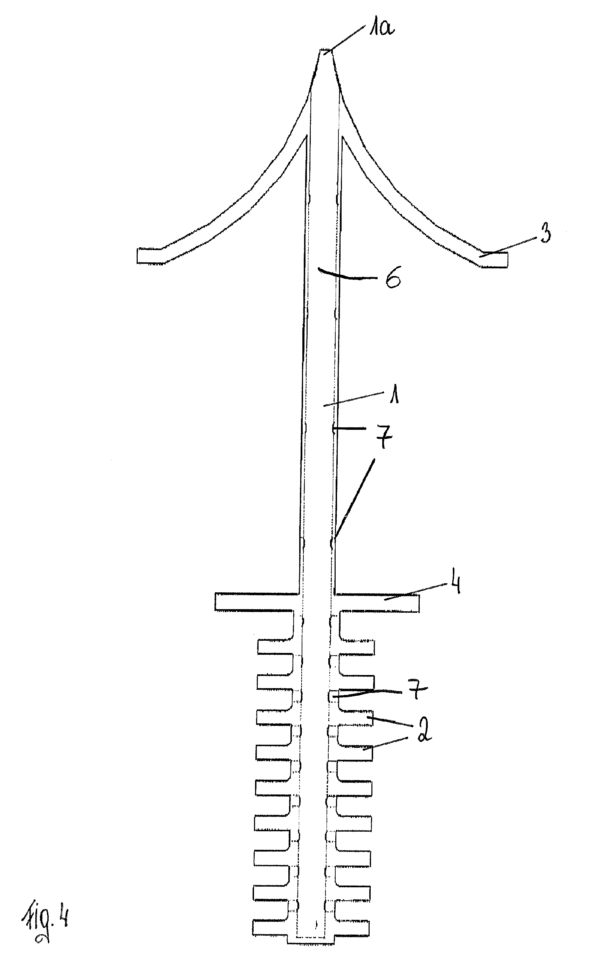

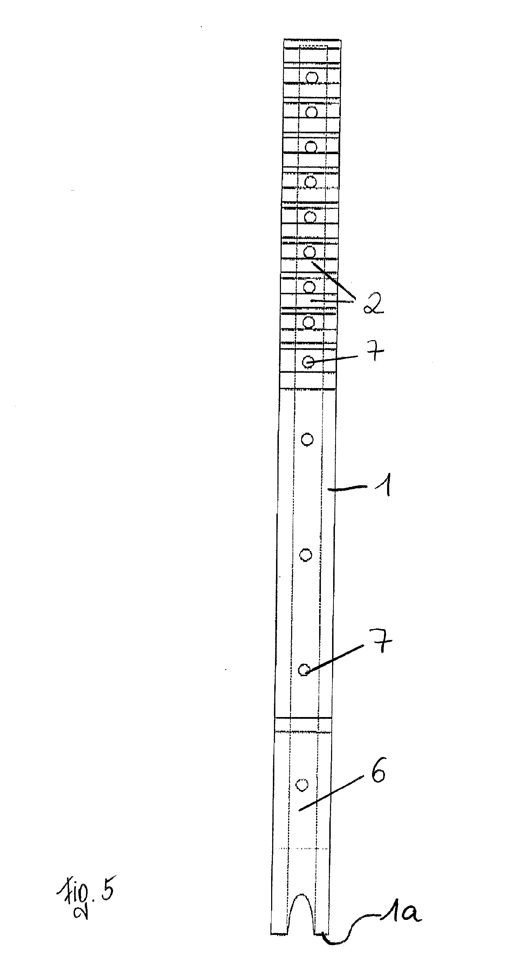

In den Figuren 3 bis 5 ist ein weiteres Ausführungsbeispiel eines Kunststoffankers zur Befestigung vom Dämmplatten an Gebäuden dargestellt. Der Schaft 1 dieses Kunststoffankers weist einen in Längsrichtung verlaufenden Kanal 6 für Klebstoff auf. Der Kanal 6 ist bei dem dargestellten Ausführungsbeispiel dadurch ausgebildet, dass der Schaft 1 hohl ist. Der Kanal 6 ist an der Spitze 1 a, also an dem vom ersten Abschnitt des Schaft 1 entfernten Ende offen. Zusätzlich weist der Schaft 1 seitliche Öffnungen 7 auf, aus denen in den Kanal 6 eingefüllter Klebstoff austreten kann. Insbesondere weist der Schaft 1 Öffnungen 7, nämlich Aussparungen, in dem ersten Abschnitt auf, die einen Austritt von Klebstoff aus dem Kanal 6 in Zwischenräume zwischen den Lamellen 2 ermöglichen.

Zum Gebrauch wird der Kunststoffanker mit dem ersten Abschnitt des Schafts 1 in ein Loch einer Gebäudewand gesteckt. Anschließend wird eine Dämmplatte gegen den Anker gedrückt, bis die Spitze 1 a des Kunststoffankers aus der Dämmplatte herausragt oder zumindest zugänglich ist, so dass Klebstoff in den Kanal 6 eingefüllt werden kann. Der Klebstoff tritt dann aus den Aussparungen 7 des Schafts 6 aus und verklebt den Anker mit der Dämmplatte beziehungsweise der Gebäudewand. Als Klebstoff sind insbesondere schäumende Kunststoffe geeignet, da diese nach Einfüllen in den Kanal 6 aus den seitlichen Öffnungen herausquellen.

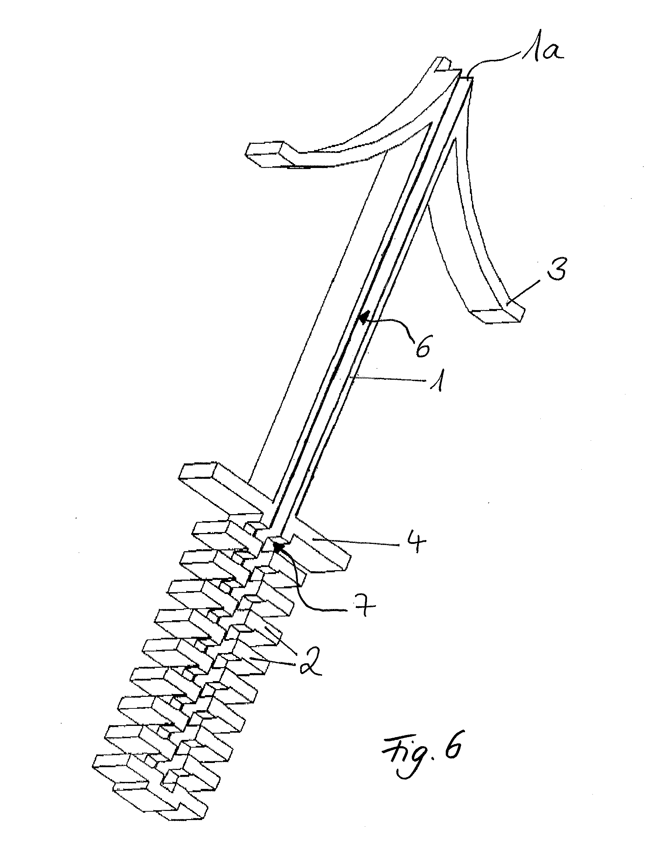

Figur 6 zeigt ein weiteres Ausführungsbeispiel eines Kunststoffankers zur Befestigung vom Dämmplatten an Gebäuden. Dieser Kunststoffanker unterscheidet sich von dem in den Figuren 3 bis 5 dargestellten Kunststoffanker im Wesentlichen dadurch, dass der Kanal 6 als eine Rinne ausgebildet ist. Wie Figur 6 zeigt ist auch dieser Kanal 6 an der Spitze 1 a offen, um ein Einfüllen von Klebstoff zu erleichtern. Zwischen den Lamellen 2 weist der Schaft 1 Aussparungen 7 auf, die einen Austritt von Klebstoff aus dem Kanal 6 in Zwischenräume zwischen den Lamellen 2 erleichtern.

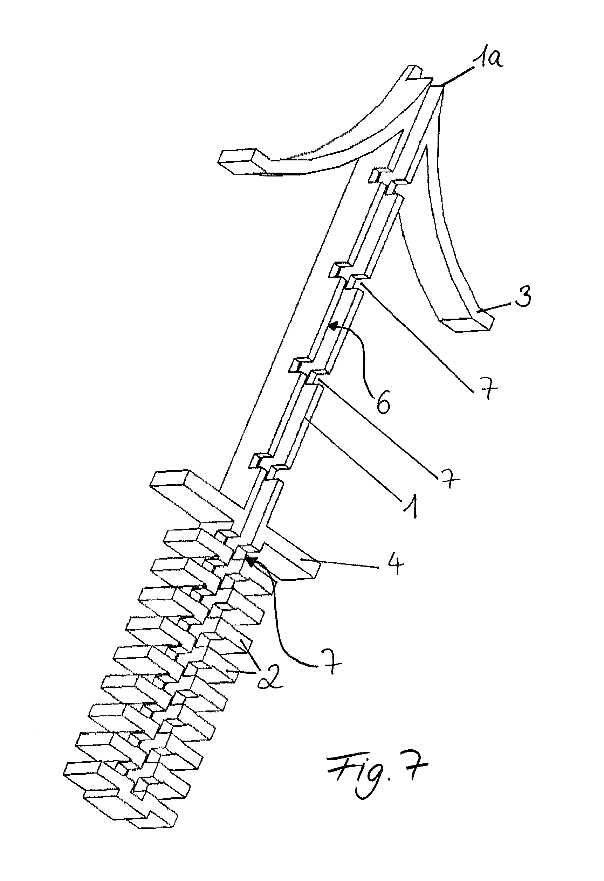

Figur 7 zeigt ein weiteres Ausführungsbeispiel, das sich von dem in Figur 6 dargestellten Ausführungsbeispiel im Wesentlichen nur dadurch unterscheidet, dass der Schaft 1 auch in dem zweiten Abschnitt Aussparungen 7 aufweist, die einen seitlichen Austritt vom Klebstoff erleichtern und somit das Verkleben des Kunststoffankers mit einer Dämmplatte verbessern können.

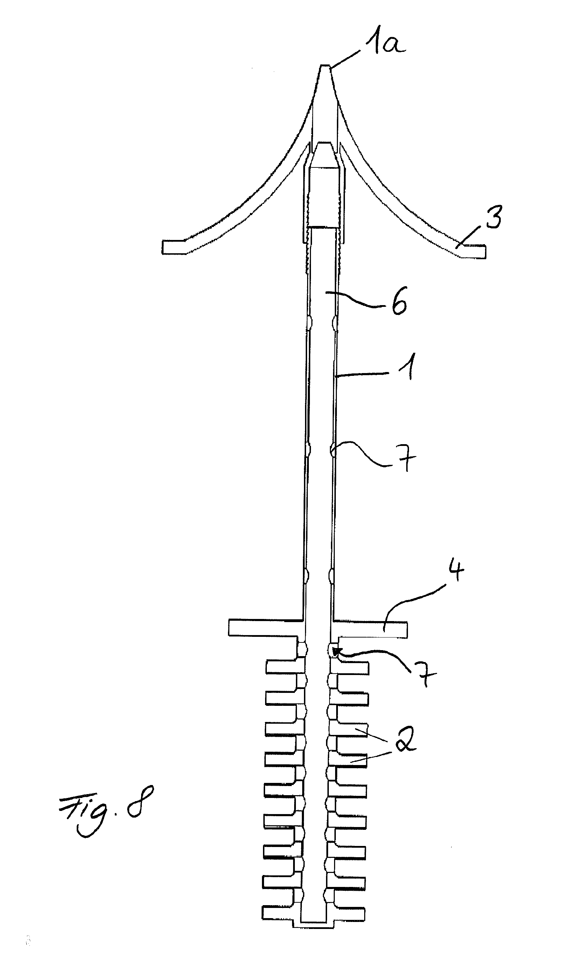

Figur 8 zeigt ein weiteres Ausführungsbeispiel eines Kunststoffankers zur Befestigung von Dämmplatten an Gebäuden. Eine Besonderheit dieses Kunststoffankers besteht darin, dass der zweite Abschnitt des Schafts 1 einen aufgesteckten Widerhaken 3 aufweist. Der Schaft hat dazu einen Abschnitt, mit Rastelementen, die bevorzugt als Rasthaken ausgebildet sind, die beispielsweise einen zahnartigen Querschnitt haben können. Diese Rastelemente bewirken einen Formschluss mit einem die Widerhaken 3 aufweisenden Bauteil, beispielsweise einer Hülse. Die Innenseite der Hülse kann mit gleichartig ausgebildeten Rasthaken wie der Schaft 1 ausgebildet sein.

Anstelle einer Rastverbindung kann der Widerhaken beispielsweise auch auf den Schaft 1 des Kunststoffankers aufgeschraubt werden. Der Widerhaken wird bevorzugt auf den Schaft 1 aufgesteckt oder aufgeschraubt, indem der Schaft 1 in eine Aufnahme des Widerhakens 3, beispielsweise eine Hülse, eingeführt wird. Der Widerhaken kann auf den Schaft 1 aber auch aufgesteckt oder aufgeschraubt werden, indem ein Verbindungsteil des Widerhakens in den Schaft 1 eingeführt wird.

Indem dem Widerhaken 3 erst später auf den Schaft 1 aufgebracht wird, kann der Schaft 1 zunächst ohne Widerhaken 3 in ein Loch einer Gebäudewand gesteckt werden. Vorteilhaft besteht dabei keine Gefahr einer Beschädigung des Widerhakens 3. Zudem kann der Schaft 1 auch mit Hilfe eines Hammers oder eines ähnlichen Werkzeugs in das Loch der Gebäudewand getrieben werden. Dies hat den Vorteil, dass die Vorsprünge 2 am ersten Abschnitt des Schafts stabiler ausgeführt werden können und somit eine festere Verankerung in der Gebäudewand erreicht werden kann.

Der Schaft 1 kann auch bei diesem Ausführungsbeispiel einen Kanal 6 aufweisen, der Aussparungen 7 aufweist, durch welche Klebstoff austreten kann. Die Spitze 1a des Schafts kann von dem Bauteil, welches den Widerhaken 3 bildet, ausgebildet sein und offen sein, um nach dem Aufstecken des Widerhakens 3 Klebstoff in den Kanal 6 einfüllen zu können.

### Bezugszahlen

- 1: Schaft
- 1 a: Spitze
- 2: Lamelle
- 3: Widerhaken
- 4: Anschlag
- 5: Aussparung
- 6: Kanal
- 7: Aussparungen

## Patentansprüche

1. Kunststoffanker zur Befestigung von Dämmplatten an Gebäuden, mit einem Schaft (1), der einen ersten Abschnitt zur Verankerung in einem Loch einer Gebäudewand und einen zweiten Abschnitt, der einen Widerhaken (3) zum Halten einer Dämmplatte trägt, aufweist.

2. Kunststoffanker nach Anspruch 1, **dadurch gekennzeichnet, dass** der erste Abschnitt eine Folge von sich quer zur Längsrichtung des Schafts (1), vorzugsweise senkrecht zur Längsrichtung des Schafts (1), erstreckenden Vorsprüngen trägt.

3. Kunststoffanker nach Anspruch 2, **dadurch gekennzeichnet, dass** die Vorsprünge Lamellen (2) sind.

4. Kunststoffanker nach einem der vorstehenden Ansprüche, **dadurch gekennzeichnet, dass** zwischen dem ersten und dem zweiten Abschnitt ein Anschlag (4) ist.

5. Kunststoffanker nach einem der vorstehenden Ansprüche, **dadurch gekennzeichnet, dass** der zweite Abschnitt mehrere hintereinander angeordnete Widerhaken (3) trägt.

6. Kunststoffanker nach einem der vorstehenden Ansprüche, **dadurch gekennzeichnet, dass** alle Widerhaken (3) in derselben Ebene liegen.

7. Kunststoffanker nach einem der vorstehenden Ansprüche, **dadurch gekennzeichnet, dass** der Schaft (1) einen rechteckigen Querschnitt aufweist.

8. Kunststoffanker nach einem der vorstehenden Ansprüche, **dadurch gekennzeichnet, dass** der Schaft (1) in dem zweiten Abschnitt Aussparungen (5) zum Aufnehmen von Klebstoff aufweist.

9. Kunststoffanker nach einem der vorstehenden Ansprüche, **dadurch gekennzeichnet, dass** Widerhaken (3) und Lamellen (2) nur von zwei gegenüberliegenden Seiten des Schafts (1) ausgehen.

10. Kunststoffanker nach einem der vorstehenden Ansprüche, **dadurch gekennzeichnet, dass** der Schaft (1) einen in seiner Längsrichtung verlaufenden Kanal (6) für Klebstoff aufweist.

11. Kunststoffanker nach Anspruch 10, **dadurch gekennzeichnet, dass** der Kanal (6) als eine Rinne ausgebildet ist.

12. Kunststoffanker nach Anspruch 10 oder 11, **dadurch gekennzeichnet, dass** der Kanal (6) an dem vom ersten Abschnitt des Schafts (1) entfernten Ende offen ist.

13. Kunststoffanker nach Anspruch 2 und einem der Ansprüche 10 bis 12, **dadurch gekennzeichnet, dass** der Schaft (1) in dem ersten Abschnitt Aussparungen (7) aufweist, die einen Austritt von Klebstoff aus dem Kanal (6) in Zwischenräume zwischen den Vorsprüngen (2) ermöglichen.

14. Kunststoffanker nach einem der vorstehenden Ansprüche, **dadurch gekennzeichnet, dass** der wenigstens eine Widerhaken (3) auf den Schaft (1) aufgesteckt oder aufgeschraubt ist.

15. Kunststoffanker nach Anspruch 14, **dadurch gekennzeichnet, dass** der aufgesteckte Widerhaken (3) oder die aufgesteckten Widerhaken (3) mit dem Schaft (1) verrastet sind.
